# EUROPÄISCHE PATENTSCHRIFT

(11) **EP 4 548 084 B1**
(45) Veröffentlichungstag und Bekanntmachung des Hinweises auf die Patenterteilung: **26.11.2025**
(21) Anmeldenummer: 23794041.6
(22) Anmeldetag: 23.10.2023
(51) Int. Cl.: G01N 21/952, G01N 21/90, G06T 7/00, G06T 7/292

(54) **PRÜFSYSTEM**
INSPECTION SYSTEM
SYSTÈME DE CONTRÔLE

(30) Priorität: 02.12.2022 DE 102022132095; 21.04.2023 DE 102023110255
(43) Veröffentlichungstag der Anmeldung: 07.05.2025
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); JANSEN, Wolfgang, 52159 Roetgen (DE)
(74) Vertreter: Kohlmann, Kai
(86) Internationale Anmeldenummer: PCT/EP2023/079428
(87) Internationale Veröffentlichungsnummer: WO 2024/115009

(56) Entgegenhaltungen:
- WO-A1-03/078928
- US-A- 5 007 096
- US-A1- 2005 259 867
- US-A1- 2013 307 962

## Beschreibung

Die Erfindung betrifft ein Prüfsystem zur allseitigen optischen Prüfung von übereinstimmenden Objekten mit einer Lagevarianz um eine Hochachse senkrecht zu einer Standfläche der zu prüfenden Objekte.

Bei den zu prüfenden Objekten handelt es sich beispielsweise um unregelmäßig geformte Objekte oder auch zylindrische Objekte, wie z.B. Joghurtbecher, Gewinde, Flaschen oder Getränkeverschlüsse mit besonderen Strukturen an der Oberfläche bzw. Mantelfläche (z.B. Klappscharnierverschlüsse). Alle diese Objekte haben gemein, dass sie eine Hochachse senkrecht zu einer Standfläche haben, um die sie zu drehen tendieren und damit die Erscheinung der für die Prüfung interessanten Oberfläche bzw. Mantelfläche verändern (Lagevarianz um die Hochachse).

Zu dieser Lagevarianz um die Hochachse kommt es beispielsweise, wenn die zu prüfenden Objekte den Bildaufnahmeeinrichtungen in einem Prüfbereich des Prüfsystems mit einem eine Transportebene bildenden Linearförderer zugeführt werden, wobei die Objekte mit ihrer Standfläche auf der Transportebene stehen.

Bei der Prüfung von Objekten stellt das digitale Kamerabild ein projiziertes Abbild des Objekts im zweidimensionalen Raum dar. Dabei gehen die Informationen über die Lage des Objekts in der dritten Dimension verloren. Bekannte Algorithmen sind in der Lage translatorische Verschiebungen, Skalierungen sowie in der Bildebene stattfindende Verdrehungen des Objekts nahezu vollständig zu kompensieren (Stichwort: Affine Abbildungen). Von diesen genannten Freiheitsgraden abweichende Lageänderungen bereiten dagegen Schwierigkeiten bei der Auswertung, denen häufig durch einen Vergleich eines als Referenz hinterlegten Bildes mit dem Bild des zu prüfenden Objektes begegnet wird.

Die Bilder können für den Vergleich nicht durch Skalierung, rotatorische und translatorische Transformation in Übereinstimmung gebracht werden. Diesem Problem kann man bei kleinen Abweichungen, d.h. geringen Lagevarianzen um die Hochachse, durch lokale Verzerrungen (Image Warping) des Bildes begegnen. Größere Abweichungen, d. h. große Lagevarianzen um die Hochachse, zwischen dem Bild des zu prüfenden Objekts und dem Referenzbild lassen sich indes nicht korrigieren.

Die WO 03/078928 A1 offenbart ein System zur Prüfung von zylindrischen Objekten, wie z.B. Dosen, mit mindestens einer digitalen Kamera, die Bilder eines Referenzobjekts in mehreren Drehlagen und der zu prüfenden Objekte erfasst. Das System zur Prüfung umfasst eine Verarbeitungslinie entlang der die zu prüfenden Objekte in vertikaler Ausrichtung der Hochachse zu einer Inspektionsstation mit einem Förderer gefördert werden. Die Inspektionsstation weist die mindestens eine Kamera und einen an der Inspektionsstation angeordneten Objektrotator zur Drehung des Referenzobjekts auf, wobei das Referenzobjekt von der mindestens einen Kamera abgebildet wird, während es in verschiedene Positionen an Ort und Stelle gedreht wird. Der Objektrotator hat ein vertikal bewegliches Objekteingriffselement mit einem Gummikegel oder einen anderen Endabschnitt, der in das zu prüfende Objekt eingreifen kann, dieses jedoch nicht beschädigt. Eine Verarbeitungseinheit ist mit der mindestens einen Kamera und dem Objektrotator verbunden und erstellt eine Referenzmaske basierend auf den Bildern des Referenzobjekts in verschiedenen gedrehten Positionen. Ein zu prüfendes Objekt wird abgebildet und eine Positionsmaske erstellt. Die Verarbeitungseinheit vergleicht die Positionsmaske für das zu prüfende Objekt mit der Referenzmaske, um eine Position und/oder Defekte des zu prüfenden Objekts zu bestimmen.

Ausgehend von diesem Stand der Technik liegt der Erfindung die Aufgabe zugrunde, ein Prüfsystem zur allseitigen Prüfung von zu prüfenden Objekten mit einer Lagevarianz um die Hochachse mithilfe eines Mehrkamerasystems zu schaffen, mit dem sich die für die Prüfung erforderlichen Referenzbilder mit geringem Aufwand über den Umfang eines Referenzobjektes und auch für solche zu prüfenden Objekte anfertigen lassen, die ein Eingreifen in das zu prüfende Objekt nicht erlauben.

Diese Aufgabe wird durch ein Prüfsystem mit den Merkmalen des Anspruchs 1 gelöst.

Der Kerngedanke der Erfindung besteht darin, dass der um eine Drehachse drehbare, motorisch angetriebene Drehteller lediglich zeitweilig in den ohnehin vorhandenen Prüfbereich des Prüfsystems einbringbar ist. Das Referenzobjekt der übereinstimmenden zu prüfenden Objekte wird auf den Drehteller mit der Standfläche aufgesetzt und mittels der im Prüfbereich ohnehin vorhandenen Bildaufnahmeeinrichtungen werden eine Vielzahl von Referenzbildern des Referenzobjekts in unterschiedlichen Drehlagen des Drehtellers aufgenommen und in einer Verarbeitungseinheit für die Bilder abgespeichert.

Die Verarbeitungseinheit ist eingerichtet, um den mittels der Bildaufnahmeeinrichtungen aufgenommenen Referenzbildsatz, d.h. die Vielzahl der in unterschiedlichen Drehlagen des Drehtellers aufgenommenen Referenzbilder des Referenzobjekts, abzuspeichern.

Nach dem Aufnehmen der Referenzbilder wird der Drehteller aus dem Prüfbereich wieder entfernt und der Regelbetrieb des Prüfsystems zur Aufnahme von Prüfbildern der zu prüfenden Objekte kann beginnen.

Die Anzahl der von dem Referenzobjekt in unterschiedlichen Drehlagen des Drehtellers und damit Winkelstellungen der Hochachse aufgenommenen Referenzbilder wird derart bestimmt, dass unabhängig von der Lagevarianz des zu prüfenden Objekts in dem aufgenommenen Prüfbild jeweils ein Referenzbild existiert, das weitestgehend mit dem aufgenommen Prüfbild übereinstimmt, da es bei einer vergleichbaren Lage des Objekts wie das Prüfbild aufgenommen wurde. Aufgrund der Aufnahme des Referenzbildes bei einer vergleichbaren Lage wie das Prüfbild können die lediglich leichten Verzerrungen mit an sich bekannten bildbasierten Techniken, wie. z.B. Image Warping, korrigiert werden, um die Bilder in Deckung zu bringen.

Um Verzerrungen zwischen den Referenzbildern und den im Regelbetrieb aufgenommenen Prüfbildern zu reduzieren, beträgt der parallele Abstand der ebenen Oberfläche des Drehtellers zu der Transportebene maximal 3 cm, vorzugsweise maximal 1 cm.

Das erfindungsgemäße Prüfsystem ist nicht nur zur Prüfung von übereinstimmenden zylindrischen Objekten, wie der nächstliegende Stand der Technik, sondern insbesondere auch zur Prüfung von übereinstimmenden unregelmäßig geformten Objekten geeignet, wie eingangs bereits erwähnt. Alle diese Objekte weisen eine Hochachse senkrecht zu einer ebenen Standfläche auf. Die ebene Standfläche erlaubt es, die zu prüfenden Objekte auf die Transportebene des Linearförderers im Regelbetrieb aufzusetzen und das entsprechende Referenzobjekt auf die ebene Oberfläche des Drehtellers. Das Aufsetzen der zu prüfenden Objekte im Regelbetrieb erfolgt vorzugsweise entlang einer in Transportrichtung laufenden Mittellinie der durch den Linearförderer aufgespannten Transportebene. Das Aufsetzen des Referenzobjekts auf die Oberfläche des Drehtellers erfolgt vorzugsweise etwa mittig, d.h. derart, dass die Hochachse des Referenzobjekts mit der Drehachse des Drehtellers zusammenfällt.

Der Linearförderer ist in vorteilhafter Ausgestaltung der Erfindung ein Bandförderer. Der Bandförderer ist ein durch einen Motor angetriebenes Fördergerät, das die zu prüfenden Objekte auf einem über Umlenkrollen umlaufenden endlosen Förderband befördert. Das endlose Förderband kann ein Transportband mit Zugträgern, aber auch eine Gliederkette (Modulband) sein. Gliederketten sind für den Transport von Stückgütern besonders vorteilhaft und zeichnen sich durch eine hohe Flexibilität aus.

Die Bildaufnahmeeinrichtungen in dem Prüfbereich des Prüfsystems sind digitale Kameras umfassend Graustufen- und Farbkameras. Zur Beleuchtung der zu prüfenden Objekte sowie des Referenzobjektes kann in dem Prüfbereich mindestens eine Lichtquelle angeordnet sein.

Um Verdeckungen von Objektbereichen entgegenzuwirken, sind die mehreren digitalen Kameras rund um das zu prüfende Objekt in dem Prüfbereich oberhalb der Transportebene angeordnet. Die mehreren digitalen Kameras erfassen die zu prüfenden Objekte und das Referenzobjekt aus verschiedenen Perspektiven. Ein Mehrkamerasystem umfasst beispielsweise 4 Kameras, die jeweils 90° versetzt zueinander um das Objekt angeordnet sind. Die Anordnung und Anzahl der um das Objekt angeordneten Kameras des Mehrkamerasystems wird derart bestimmt, dass deren Erfassungsbereiche jedes zu prüfende Objekt allseitig erfassen.

Eine bevorzugte Ausführungsform zum zeitweiligen Einbringen des Drehtellers in den Prüfbereich ergibt sich aus den Merkmalen des Anspruchs 5. Um den Abstand zwischen der Oberfläche des Drehtellers und der Transportebene weiter zu reduzieren sieht die bevorzugte Ausführungsform der Erfindung zur zeitweiligen Einbringung des Drehtellers in den Prüfbereich vor, dass in geringem Abstand oberhalb der Transportebene drei in gleichmäßigem Winkelabstand ortsfest angeordnete Räder den äußeren Rand des Drehtellers erfassen, wobei eines der Räder angetrieben und eines der Räder gegen die Kraft eines Federelementes von dem äußeren Rand des Drehtellers weg bewegbar ist, um den Drehteller nach dem Aufnehmen der Referenzbilder entfernen zu können und den Regelbetrieb des Prüfsystems zu beginnen. Der Abstand zwischen der Oberfläche des Drehtellers und der Transportebene entspricht in etwa der Stärke des Drehtellers, der mit minimalem parallelen Abstand zu der Transportebene zwischen den drei Rädern um eine Drehachse drehbar gelagert ist.

Die Räder sind vorzugsweise als Rillenräder ausgebildet. Die umlaufende Rille nimmt formschlüssig den äußeren Rand des Drehtellers auf und kann beispielsweise als V-förmige Nut ausgebildet sein. Zumindest das Antriebsrad kann eine haftungserhöhende Beschichtung, insbesondere einen Reibbelag aufweisen, um die Antriebskräfte schlupffrei auf den Drehteller zu übertragen.

Die Räder können jedoch auch als Zahnräder ausgebildet sein, die mit einem am äußeren Rand des Drehtellers angeordneten Zahnkranz zusammenwirken. Die Übertragung der Antriebskräfte von dem als Zahnrad ausgeführten Antriebsrad auf den Zahnkranz ist stets schlupffrei.

Die Referenzbilder werden vorzugsweise während einer Drehung des Drehtellers aufgenommen, wobei die Drehgeschwindigkeit des Drehtellers, die Auslösungszeitpunkte und Belichtungszeiten der digitalen Kameras aufeinander abgestimmt sind. Die Referenzbilder können jedoch auch aufgenommen werden, wenn der Drehteller in einer Ruhestellung ist.

Für eine gleichmäßige Drehung des Drehtellers während des Aufnehmens der Referenzbilder kommen insbesondere Servomotoren, i.d.R. Gleichstrom- oder Synchronmotoren in Betracht.

Sofern die Referenzbilder in einer Ruhestellung des Drehtellers aufgenommen werden sollen, kann das angetriebene Rad mit einem Schrittmotor verbunden sein, um den Drehwinkel des Referenzobjektes zwischen den nacheinander aufzunehmenden Referenzbildern konstant zu halten. Der mit dem Rad über eine Welle verbundene Schrittmotor ermöglicht es, den Drehteller um dessen Drehachse schrittweise um einen konstanten Winkel (Schritt) ohne Sensoren zur Positionsrückmeldung zu drehen.

Die Verarbeitungseinheit des Prüfsystems ist eingerichtet, nach dem Erfassen der Referenzbilder aus dem Referenzbildsatz das Referenzbild zu ermitteln, das mit dem aufgenommenen Prüfbild von jedem zu prüfenden Objekt die höchste Übereinstimmung aufweist. Die Ermittlung des besten Referenzbildes kann anhand von unmittelbaren Übereinstimmungskriterien zwischen den Bildern oder indirekt über einen Parameter, z.B. eine Objektkante oder eine Markierung auf der Mantelfläche, der die Lagevarianz des Objektes in dem Referenz- und Prüfbild beschreibt, erfolgen.

Nachdem das Referenzbild ermittelt wurde, das mit dem aufgenommenen Prüfbild die höchste Übereinstimmung aufweist, korrigiert die Verarbeitungseinheit noch bestehende Verzerrungen zwischen dem aufgenommenen Prüfbild und dem ermittelten Referenzbild und bringt die beiden Bilder in Deckung. Anschließend werden die in Deckung gebrachten Bilder miteinander verglichen, um beispielsweise Fehler in der Oberfläche des zu prüfenden Objekts zu erkennen und ggf. fehlerhafte Objekte in Transportrichtung hinter dem Prüfbereich auszuschleusen.

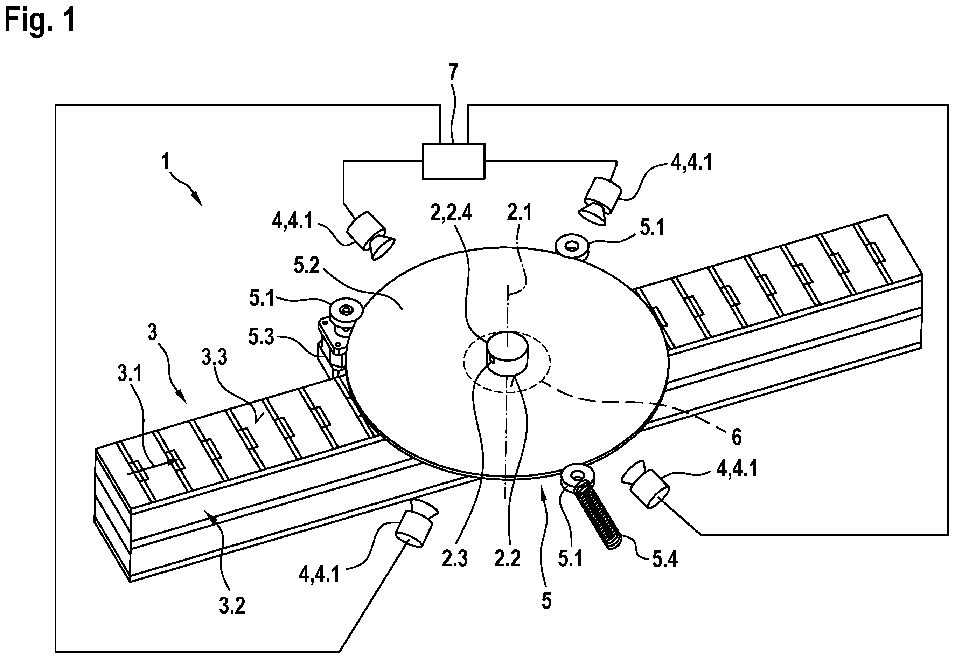

Nachfolgend wird die Erfindung anhand eines Ausführungsbeispieles näher erläutert. Es zeigt
- **Figur 1**: eine schematische Teilansicht eines erfindungsgemäßen Prüfsystems zur allseitigen Prüfung von übereinstimmenden Objekten.

Figur 1 zeigt in einer perspektivischen Ansicht eine schematische Teilansicht eines erfindungsgemäßen Prüfsystems (1) zur allseitigen optischen Prüfung von übereinstimmenden Objekten (2). Bei den zu prüfenden Objekten (2) handelt es sich beispielsweise um einen zylindrischen Behälter mit einer Hochachse (2.1) senkrecht zu einer Standfläche (2.2). Auf der Mantelfläche der zu prüfenden Objekte (2) befindet sich eine markante Markierung (2.3), beispielsweise ein Symbol auf einem Etikett oder ein Strichcode.

Als wesentliche Komponenten umfasst das Prüfsystem (1) einen Linearförderer (3), mehrere Bildaufnahmeeinrichtungen (4) und einen um eine Drehachse drehbaren, motorisch angetriebenen Drehteller (5), der zeitweilig in einen Prüfbereich (6) einbringbar ist.

Der Linearförderer (3) ist in dem dargestellten Ausführungsbeispiel ein Bandförderer, der die zu prüfenden Objekte (2) auf einer über nicht dargestellte, endseitig angeordnete Umlenkrollen umlaufenden Gliederkette (3.2) in Transportrichtung (3.1) durch den Prüfbereich (6) fördert. Die Oberfläche der umlaufenden Gliederkette (3.2) bildet im Obertrum des Linearförderers(3) eine Transportebene (3.3). Die ebene Standfläche (2.2) erlaubt es, die zu prüfenden Objekte (2) im Regelbetrieb auf die Transportebene (3.3) des Linearförderers (3) im Bild links vom Prüfbereich (6) aufzusetzen und von dem Aufgabepunkt durch den Prüfbereich (6) hindurch zu fördern. Selbst wenn sämtliche zu prüfenden Objekte mit exakt gleicher Ausrichtung der Markierung (2.3) am Aufgabepunkt auf die Gliederkette (3.2) des Linearförderers (3) aufgesetzt werden können, neigen die Objekte (2) während des Transportes dazu, sich um die Hochachse (2.1) zu drehen, was nachfolgend auch als Lagevarianz der zu prüfenden Objekte um die Hochachse (2.1) bezeichnet wird. Die Lagevarianz ändert die Erscheinung der zu prüfenden Objekte in einem aus einer festgelegten Perspektive von einer Bildaufnahmeeinrichtung (4) aufgenommenen Prüfbild.

Die vier Bildaufnahmeeinrichtungen (4) in dem Prüfbereich (6) des Prüfsystems (1) sind digitale Kameras (4.1). Um Verdeckungen von Objektbereichen der zu prüfenden Objekte entgegenzuwirken, sind die vier digitalen Kameras (4.1) jeweils 90 Grad versetzt zueinander um das Objekt (2) angeordnet. Die digitalen Kameras (4.1) befinden sich in einer Ebene, die parallel oberhalb der Transportebene (3.3) und der Oberfläche des zeitweilig in den Prüfbereich einbringbaren Drehtellers (5) angeordnet ist. Die Bildaufnahmeeinrichtung (4) sind operativ mit einer Verarbeitungseinheit (7), beispielsweise einem Personal Computer verbunden, der zur Speicherung und Verarbeitung der aufgenommenen Bilder eingerichtet ist.

Die Bildaufnahmeeinrichtungen (4) sind eingerichtet zum Erfassen von Referenzbildern eines Referenzobjektes (2.4) der zu prüfenden Objekte (2) und von Prüfbildern der zu prüfenden Objekte (2) in einem Prüfbereich. Das Referenzobjekt ist ein zumindest in Bezug auf die Prüfkriterien einwandfreies Objekt (2).

Um mittels der Bildaufnahmeeinrichtungen (4) eine Vielzahl von Referenzbildern des Referenzobjektes (2.4) aufzunehmen und als Referenzbildsatz in der Verarbeitungseinheit (7) abzuspeichern ist der Drehteller (5) zeitweilig, insbesondere vor Beginn des Regelbetriebes des Prüfsystems (1) in den Prüfbereich (6) einbringbar.

Eine bevorzugte Möglichkeit zum zeitweiligen Einbringen des Drehtellers (5) ist in Figur (1) dargestellt. In geringem Abstand, von z.B. max. 3mm, oberhalb der Transportebene (3.3) sind drei in gleichmäßigen Winkelabstand von 120 Grad ortsfest angeordnete Räder (5.1) angeordnet. Die als Rillenräder ausgebildeten Räder (5.1) nehmen den äußeren Rand (5.2) des Drehtellers (5) formschlüssig auf. Eines der Räder (5.1) wird von einem Schrittmotor (5.3) angetrieben, während das im Bild unten dargestellte Rad (5.1) gegen die Kraft eines Federelementes (5.4) vom äußeren Rand (5.2) des Drehtellers (5) radial weg bewegbar ist, um den Drehteller (5) nach dem Aufnehmen der Referenzbilder aus dem Prüfbereich (6) entfernen zu können. Der Übersichtlichkeit halber sind die Drehachsen der Räder (5.1) sowie deren ortsfeste Halterungen in Figur 1 nicht dargestellt. Auch die Halterungen für die Bildaufnahmeeinrichtungen (4) sind der Übersichtlichkeit halber nicht dargestellt.

Der mit einem der Räder (5.1) verbundene Schrittmotor (5.3) ermöglicht es, den Drehteller (5) um dessen Drehachse schrittweise in definierten Inkrementen, von beispielsweise 1 - 5 Grad, über insgesamt 90 Grad zu drehen und nach jedem Schritt Referenzbilder mit sämtlichen Bildaufnahmeeinrichtungen (4) aufzunehmen, wodurch aufgrund der insgesamt vier Bildaufnahmeeinrichtungen (4) allseitig Referenzbilder des Referenzobjektes (2.4) vorliegen. Die in den unterschiedlichen Drehlagen von den Bildaufnahmeeinrichtungen (4) aufgenommenen Referenzbilder bilden einen Referenzbildsatz, der in der Verarbeitungseinheit (7) gespeichert wird.

Alternativ wird der Drehteller um dessen Drehachse kontinuierlich mit einem Servomotor gedreht, um mit sämtlichen Bildaufnahmeeinrichtungen (4) in definierten Inkrementen, von beispielsweise 1 - 5 Grad, während der Drehung Referenzbilder aufzunehmen, wodurch aufgrund der insgesamt vier Bildaufnahmeeinrichtungen (4) allseitig Referenzbilder des Referenzobjektes (2.4) vorliegen.

Nach dem Aufnehmen des Referenzbildsatzes wird der Drehteller (5) entfernt und der Regelbetrieb des Prüfsystems beginnt. Die Verarbeitungseinheit (7) des Prüfsystems ist eingerichtet, um im Regelbetrieb aus dem Referenzbildsatz das Referenzbild zu ermitteln, das mit dem im Prüfbereich (6) aufgenommenen Prüfbild von des zu prüfenden Objekts (2) die höchste Übereinstimmung aufweist. Die Ermittlung des besten Referenzbildes erfolgt in dem dargestellten Ausführungsbeispiel indirekt über einen Parameter, nämlich die Markierung (2.3) auf der Mantelfläche, der die Lagevarianz des Objektes (2) in dem Referenz- und Prüfbild beschreibt.

Nachdem das Referenzbild von der Verarbeitungseinheit (7) ermittelt wurde, das mit dem aufgenommenen Prüfbild die höchste Übereinstimmung aufweist, korrigiert die Verarbeitungseinheit (7) noch bestehende Verzerrungen zwischen den aufgenommenen Prüfbild und dem ermittelten Referenzbild und bringt die beiden Bilder in Deckung.

Anschließend werden die in Deckung gebrachten Bilder miteinander verglichen, um beispielsweise einen Fehler in dem Etikett der zu prüfenden Objekte (2) zu erkennen und ggf. Objekte (2) mit fehlerhaften Etiketten in Transportrichtung (3.1) hinter dem Prüfbereich (6) mit an sich bekannten Mitteln, beispielsweise mittels Druckluft, auszuschleusen.

| **Nr.** | **Bezeichnung** |
|---|---|
| 1. | Prüfsystem |
| 2. | Objekte (zu prüfende) |
| 2.1 | Hochachse |
| 2.2 | Standfläche |
| 2.3 | Markierung |
| 2.4 | Referenzobjekt |
| 3. | Linearförderer |
| 3.1 | Transportrichtung |
| 3.2 | Gliederkette |
| 3.3 | Transportebene |
| 4. | Bildaufnahmeeinrichtung |
| 4.1 | Kamera |
| 5. | Drehteller |
| 5.1 | Räder |
| 5.2 | Rand |
| 5.3 | Schrittmotor |
| 5.4 | Federelement |
| 6. | Prüfbereich |
| 7. | Verarbeitungseinheit |

## Patentansprüche

1. Prüfsystem (1) zur allseitigen Prüfung von übereinstimmenden Objekten (2) mit einer Lagevarianz um eine Hochachse (2.1) senkrecht zu einer Standfläche (2.2) der zu prüfenden Objekte (2), umfassend
- einen Linearförderer (3), eingerichtet zum Transportieren der Objekte (2) in einer Transportrichtung (3.1) auf einer Transportebene (3.3),
- mehrere digitale Kameras (4.1), eingerichtet zum Erfassen von Referenzbildern eines Referenzobjektes (2.4) der zu prüfenden Objekte (2) und von Prüfbildern der zu prüfenden Objekte (2) in einem ohnehin vorhandenen Prüfbereich (6) des Prüfsystems, wobei die mehreren digitalen Kameras (4.1) rund um das zu prüfende Objekt in dem vorhandenen Prüfbereich (6) oberhalb der Transportebene (3.3) derart angeordnet sind, dass sie in dem vorhandenen Prüfbereich (6) jedes zu prüfende Objekt (2) allseitig erfassen,
- einen um eine Drehachse drehbaren, motorisch angetriebenen Drehteller (5), der zeitweilig in den vorhandenen Prüfbereich (6) einbringbar ist, wobei
- der Abstand der Oberfläche des Drehtellers (5) zu der Transportebene (3.3) maximal 3 cm beträgt,
- das Referenzobjekt (2.4) auf den Drehteller (5) mit der Standfläche (2.2) aufsetzbar ist und wobei das Prüfsystem eingerichtet ist, mittels der mehreren digitalen Kameras (4) eine Vielzahl von Referenzbildern des Referenzobjekts (2.4) in unterschiedlichen Drehlagen des Drehtellers (5) aufzunehmen und in einer Verarbeitungseinheit (7) abzuspeichern

2. Prüfsystem nach Anspruch 1, **dadurch gekennzeichnet dass** die Objekte (2, 2.4) unregelmäßig geformt oder zylindrisch sind.

3. Prüfsystem nach Anspruch 1 oder 2, **dadurch gekennzeichnet, dass** der Linearförderer (3) ein Bandförderer ist.

4. Prüfsystem nach einem der Ansprüche 1 bis 3, **dadurch gekennzeichnet, dass** der parallele Abstand der ebenen Oberfläche des Drehtellers (5) zu der Transportebene (3.3) maximal 1 cm beträgt.

5. Prüfsystem nach einem der Ansprüche 1 bis 4, **dadurch gekennzeichnet, dass** oberhalb der Transportebene (3.3) drei in vorzugsweise gleichmäßigem Winkelabstand ortsfest angeordnete Räder (5.1) den äußeren Rand (5.2) des Drehtellers (5) erfassen, wobei eines der Räder (5.1) angetrieben und eines der Räder (5.1) gegen die Kraft eines Federelementes (5.4) von dem äußeren Rand (5.2) des Drehtellers (5) weg bewegbar ist, um den Drehteller (5) nach dem Aufnehmen der Referenzbilder entfernen zu können.

6. Prüfsystem nach Anspruch 5, **dadurch gekennzeichnet, dass** das angetriebene Rad (5.1) mit einem Schrittmotor (5.3) oder einem Servomotor verbunden ist.

7. Prüfsystem nach Anspruch 5 oder 6, **dadurch gekennzeichnet, dass** die Räder (5.1) als Rillenräder ausgebildet sind.

8. Prüfsystem nach Anspruch 5 oder 6, **dadurch gekennzeichnet, dass** die Räder als Zahnräder ausgebildet sind, die mit einem am äußeren Rand des Drehtellers (5) angeordneten Zahnkranz zusammenwirken.

9. Prüfsystem nach einem der Ansprüche 1 bis 8, **dadurch gekennzeichnet, dass** die Verarbeitungseinheit (7) weiter eingerichtet ist, aus dem Referenzbildsatz das Referenzbild zu ermitteln, das mit dem aufgenommenen Prüfbild von jedem zu prüfenden Objekt die höchste Übereinstimmung aufweist.

10. Prüfsystem nach Anspruch 9, **dadurch gekennzeichnet, dass** die Verarbeitungseinheit (7) weiter eingerichtet ist, Verzerrungen zwischen dem aufgenommenen Prüfbild und dem ermittelten Referenzbild zu korrigieren und die beiden Bilder in Deckung zu bringen.

## Claims

1. An inspection system (1) for inspecting all sides of matching objects (2) with a positional variance about a vertical axis (2.1) perpendicular to a standing surface (2.2) of the objects (2) to be inspected, comprising
- a linear conveyor (3), designed for transporting the objects (2) in a transport direction (3.1) on a transport plane (3.3),
- a plurality of digital cameras (4.1), designed for recording reference images of a reference object (2.4) of the objects (2) to be inspected and inspection images of the objects (2) to be inspected in an inspection area (6) of the inspection system which is present anyway, wherein the plurality of digital cameras (4.1) are arranged above the transport plane (3.3) around the object to be inspected in the present inspection area (6) in such a way that they record all sides of each object (2) to be inspected in the present inspection area (6),
- a motor-driven rotary table (5) which can be rotated about an axis of rotation and which can be temporarily introduced into the present inspection area (6), wherein
- the distance between the surface of the rotary table (5) and the transport plane (3.3) is not more than 3 cm,
- the reference object (2.4) can be placed on the rotary table (5) by way of the standing surface (2.2) and
- wherein the inspection system is designed for capturing a plurality of reference images of the reference object (2.4) in different rotational positions of the rotary table (5) by means of the plurality of digital cameras (4.1) and store them in a processing unit (7).

2. The inspection system as claimed in claim 1, **characterized in that** the objects (2, 2.4) are irregularly shaped or cylindrical.

3. The inspection system as claimed in claim 1 or 2, **characterized in that** the linear conveyor (3) is a belt conveyor.

4. The inspection system as claimed in any one of claims 1 to 3, **characterized in that** the parallel distance between the flat surface of the rotary plate (5) and the transport plane (3.3) is not more than 1 cm.

5. The inspection system as claimed in any one of claims 1 to 4, **characterized in that**, above the transport plane (3.3), three wheels (5.1), which are arranged fixed at a preferably even angular distance, hold the outer edge (5.2) of the rotary table (5), wherein one of the wheels (5.1) is driven and one of the wheels (5.1) can be moved away from the outer edge (5.2) of the rotary table (5) against the force of a spring element (5) in order to be able to remove the rotary table (5.4) after the reference images have been captured.

6. The inspection system as claimed in claim 5, **characterized in that** the driven wheel (5.1) is connected to a stepper motor (5.3) or a servo motor.

7. The inspection system as claimed in claim 5 or 6, **characterized in that** the wheels (5.1) are in the form of grooved wheels.

8. The inspection system as claimed in claim 5 or 6, **characterized in that** the wheels are in the form of gear wheels which interact with a gear ring arranged on the outer edge of the rotary plate (5).

9. The inspection system as claimed in any one of claims 1 to 8, **characterized in that** the processing unit (7) is further designed to determine from the reference image set the reference image which has the highest degree of matching with the captured inspection image of each object to be inspected.

10. The inspection system as claimed in claim 9, **characterized in that** the processing unit (7) is further designed to correct distortions between the captured inspection image and the determined reference image and to align the two images.

## Revendications

1. Système d'inspection (1), destiné à inspecter de toutes part des objets (2) concordants avec une variation de position autour d'un axe vertical (2.1), à la perpendiculaire d'une surface d'appui (2.2) de l'objet (2) qui doit être inspecté, comprenant
- un convoyeur linéaire (3), configuré pour transporter les objets (2) dans une direction de transport (3.1) sur un plan de transport (3.3),
- plusieurs caméras (4.1) numériques, configurées pour détecter des images de référence d'un objet de référence (2.4) des objets (2) qui doivent être inspectés et des images d'inspection des objets (2) qui doivent être inspectés dans une zone d'inspection (6) déjà présente du système d'inspection, les plusieurs caméras (4.1) numériques étant placées tout autour de l'objet qui doit être inspecté dans la zone d'inspection (6) présente au-dessus du plan de transport (3.3), de sorte à détecter de toutes parts chaque objet (2) qui doit être inspecté dans la zone d'inspection (6),
- un plateau rotatif (5), entraîné par moteur, susceptible de tourner autour d'un axe de rotation, qui est insérable en deux parties dans la zone d'inspection (6) présente,
- l'écart entre la surface du plateau rotatif (5) et le plan de transport (3.3) s'élevant à un maximum de 3 cm,
- l'objet de référence (2.4) étant susceptible d'être posé par la surface d'appui (2.2) sur le plateau rotatif (5) et le système d'inspection étant configuré pour enregistrer au moyen des caméras (4) numériques une pluralité d'images de référence de l'objet de référence (2.4) dans différentes positions en rotation du plateau rotatif (5) et pour les mémoriser dans une unité de traitement (7).

2. Système d'inspection selon la revendication 1, **caractérisé en ce que** les objets (2, 2.4) sont de forme irrégulière ou cylindriques.

3. Système d'inspection selon la revendication 1 ou 2, **caractérisé en ce que** le convoyeur linéaire (3) est un convoyeur à bande.

4. Système d'inspection selon l'une quelconque des revendications 1 à 3, **caractérisé en ce que** l'écart parallèle entre la surface plane du plateau rotatif (5) et le plan de transport (3.3) s'élève à un maximum de 1 cm.

5. Système d'inspection selon l'une quelconque des revendications 1 à 4, **caractérisé en ce qu'**au-dessus du plan de transport (3.3), trois roues (5.1) placées de manière stationnaire à un écart angulaire de préférence régulier détectent le bord (5.2) extérieur du plateau rotatif (5), l'une des roues (5.1) étant entraînée et l'une des roues (5.1) étant déplaçable à l'encontre de la force d'un élément à ressort (5.4) en éloignement du bord (5.2) extérieur du plateau rotatif (5), pour pouvoir retirer le plateau rotatif (5) après l'enregistrement des images de référence.

6. Système d'inspection selon la revendication 5, **caractérisé en ce que** la roue (5.1) entraînée est reliée avec un moteur pas à pas (5.3) ou un servomoteur.

7. Système d'inspection selon la revendication 5 ou 6, **caractérisé en ce que** les roues (5.1) sont conçues sous la forme de roues rainurées.

8. Système d'inspection selon la revendication 5 ou 6, **caractérisé en ce que** les roues sont conçues sous la forme de roues dentées, qui coopèrent avec une couronne dentée placée sur le bord extérieur du plateau rotatif (5).

9. Système d'inspection selon l'une quelconque des revendications 1 à 8, **caractérisé en ce que** l'unité de traitement (7) est configurée par ailleurs, pour déterminer à partir du jeu d'images de référence l'image de référence qui fait preuve de la concordance la plus élevée avec l'image d'inspection enregistrée de chaque objet qui doit être inspecté .

10. Système d'inspection selon la revendication 9, **caractérisé en ce que** l'unité de traitement (7) est configurée par ailleurs pour corriger des distorsions entre l'image d'inspection enregistrée et l'image de référence déterminée et pour superposer les deux images.
